(19) Europäisches Patentamt
European Patent Office
Office européen des brevets

(11) **EP 3 214 424 A1**

(12) **EUROPEAN PATENT APPLICATION**

(43) Date of publication:
**06.09.2017 Bulletin 2017/36**

(51) Int Cl.:
**G01N 11/16** *(2006.01)*　　**G01N 9/04** *(2006.01)*
**G01N 9/00** *(2006.01)*　　**G01N 29/036** *(2006.01)*

(21) Application number: **16382099.6**

(22) Date of filing: **04.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Buira Nunez, Ernest**
**08980 Sant Feliu de Llobregat (ES)**

(72) Inventors:
• ADJALI, Mustapha
**08850 Gavà (ES)**
• SANCHEZ-BALLESTEROS ALMEIDA, Julian
**08850 Gavà (ES)**

(74) Representative: **Oficina Ponti, SLP**
**C. de Consell de Cent 322**
**08007 Barcelona (ES)**

(54) **A DETECTION DEVICE, A SYSTEM AND A METHOD FOR MEASURING FLUID PROPERTIES INCLUDING VISCOSITY AND/OR DENSITY**

(57) The detection device comprises:
- a sensor comprising:
- an oscillating element (O) for transmitting a mechanical vibration to a target fluid;
- excitation means for making the oscillating element (O) oscillate; and
- sensing means for sensing the mechanical vibration of the oscillating element (O) and for converting the sense mechanical vibration into a sensing electrical signal (Sd, Sd1);

- and a control unit to provide an electrical excitation signal (Se, Se1) to the excitation means, to receive the sensing electrical signal (Sd, Sd1) and to perform the measurement of the viscosity and/or density of the target fluid, which is adapted to automatically adapt its operation, in field, to the viscosity and/or density of the target fluid to be measured.

The system comprises a plurality of detection devices according to the invention, and the method is adapted to use the detection device of the invention.

**Fig. 3**

**Description**

<u>Technical field</u>

The present invention generally concerns, in a first aspect, to a detection device for measuring fluid properties including viscosity and/or density, and more particularly to a detection device which automatically adapts its operation, in field, to the target fluid whose properties are to be measured.

A second aspect of the invention relates to a system comprising a plurality of detection devices according to the first aspect.

A third aspect of the invention relates to a method for measuring fluid properties including viscosity and/or density, with a detection device according to the first aspect.

<u>State of the art</u>

Most of the current work done to measure the properties of a fluid relies on different working principles. Most of them are large intrusive systems. Those devices do not allow a use with small quantities of sample and small pipes and they are highly affected influenced by the variations of pressure, temperature and flow. They require high frequency maintenance and cleaning because some of them come with moving parts subjected to wearing and or deposition. They are not smart devices only providing data to external control units such as PLC or DCS (Distributed Control Systems) to control the process.

Conventional vibration base sensor work using one excitation signal generating a vibration with only one specific shear rate. This does not allow them to characterize the non-Newtonian fluids that have their apparent viscosity varying depending on the shear rate applied.

Those conventional vibration base devices are also calibrated for one specific range of viscosity or density. As the calibrated viscosity range is increased, the accuracy of any particular reading decreases. If the fluid inside the flow line or the tank changes and has a density or a viscosity that is not included into the factory calibration, it will lead to bad measurements or no measurements at all. The said devices will have to be adapted or recalibrated before being used in another viscosity range.

It is known from EP2045594A1, a method and system for determining the viscosity of a product. The system uses a rigid and long rod of several centimetres (~6 cm) as oscillating element. The flow has a big influence on it as well as the temperature. In mid and long term use, the oscillating element will be affected by deposition and dirt which is going to change its characteristics and lead to bad measurements (especially in some applications such as paints and inks, HFO, MDO). Above all, it is impossible to integrate it into small pipes.

US7874199B2 presents a density and viscosity sensor that uses a two modes excitation principle. The first mode is adapted to move a volume of fluid and the second mode is adapted to shear a surrounding fluid. The shape of the resonator being unsymmetrical makes the fluid flowing through it sticking and changing its characteristics. The sensor becomes no longer usable and needs deep cleaning and new calibration. All of this makes it not suitable for application with dirty environments.

US6450013B1 discloses a sensor constituted by a transducer including a resonant structure having two spring mass systems vibrating in antiphase.

One of the major drawbacks of the sensors described in the above cited prior art documents, and also of all the existing viscosity and density detection devices, is that they provide measurements with variable performances depending on the range of density and viscosity. For example, the more the viscosity increases, the more the percentage of error on the viscosity measurements increases. The same occurs for the density as well. None of the known viscosity and density detection devices is able to perform accurate viscosity and density measurements independently of the range of density and viscosity of the fluid with which they are in contact.

<u>Description of the invention</u>

It is necessary to provide an alternative to the state of the art which covers the gaps found therein, particularly related to the lack of detection devices adapted for performing accurate viscosity and/or density measurements for a plurality of different fluids.

To that end, the present invention relates, in a first aspect, to a detection device for measuring fluid properties including viscosity and/or density, comprising:

- a sensor comprising:

    - an oscillating element configured and arranged for transmitting a mechanical vibration to a target fluid with which at least part of said oscillating element is in contact;

- excitation means configured and arranged for making said oscillating element oscillate to transmit said mechanical vibration to the target fluid, when receiving an electrical excitation signal; and
- sensing means arranged for sensing the mechanical vibration of the oscillating element and for converting the sense mechanical vibration into a sensing electrical signal;

- and a control unit electrically connected to said excitation means and to said sensing means, and adapted to generate and provide said electrical excitation signal to said excitation means, to receive said sensing electrical signal from the sensing means and to perform, by means of processing means included in the control unit, the measurement of the viscosity and/or density of said target fluid by means of calculation based on values associated to the sensing electrical signal.

In contrast to the known viscosity and/or density detection devices, the detection device of the first aspect of the invention, in a characteristic manner, is adapted for measuring the viscosity and/or density of a plurality of different target fluids, and the control unit is adapted to automatically adapt its operation, in field, to the viscosity and/or density of the target fluid in contact with the oscillating element.

For an embodiment, the control unit is adapted to control the sensor to perform a rough measurement of the viscosity and/or density of the target fluid, and then perform said automatic adaptation based on said rough measurement in order to perform more accurate measurements of the viscosity and/or density thereof.

Preferably, the above mentioned automatic adaptation of the operation of the control unit is performed in real time or in near real time.

Depending on the embodiment, said operation of the control unit refers to at least one of said generation of said electrical excitation signal and said calculation of the target fluid viscosity and/or density measurement.

For an embodiment, said operation of the control unit referring to the generation of the electrical excitation signal is an auto-gain control operation, wherein the control unit comprises memory means which store information defining a default electrical excitation signal, such as its voltage value $V_d$ (or its current value $I_d$), and a data structure correlating data of a plurality of electrical excitation signals with data of a plurality of frequency ranges $Range_0$, $Range_1$,..., $Range_n$, the processing means having access to said memory means and being adapted to perform said auto-gain operation, which comprises, in sequence:

i) the processing means retrieving from said memory means said information defining said default electrical excitation signal, and collaborating with other electronic and electric components of the control unit to use said information to generate and provide a default electrical excitation signal to the excitation means;
ii) the processing means measuring the frequency $F_0$ of the received sensing electrical signal; and
iii) the processing means looking up in said data structure the measured frequency $F_0$ and retrieving the data (voltage value $V_n$ or current value In) of at least one optimal electrical excitation signal which is correlated with the frequency range $Range_0$ or $Range_1$... or $Range_n$ encompassing said measured frequency $F_0$, and providing said at least one optimal electrical excitation signal to the excitation means and measuring at least one optimal frequency $F_{0f}$ corresponding to said at least one optimal electrical excitation signal.

For a non Newtonian fluid, step iii) is repeated for obtaining a plurality of optimal electrical excitation signals, and measuring a plurality of corresponding optimal frequencies, in order to calculate the apparent viscosity.

For another embodiment, complementary or alternative to the above described auto-gain embodiment, the above mentioned operation of the control unit referring to the generation of the electrical excitation signal is an auto-calibration operation, wherein the control unit comprises memory means which store information regarding several adjusted parameters, such as $Mod_0$, $Mod_1$, ..., $Mod_N$, of at least one calculation model MOD, correlating frequency values with fluid viscosity and/or density values, the processing means having access to said memory means and being adapted to perform said auto-calibration operation, which comprises:

a) selecting, from said several adjusted parameters $Mod_0$, $Mod_1$, ..., $Mod_N$, the ones which are adjusted for a frequency range including the value of said optimal frequency $F_{0f}$, and
b) using said calculation model MOD with said selected adjusted parameters to calculate the final measurement of the viscosity and/or density of the target fluid.

For a non Newtonian fluid, steps a) and b) are repeated for all the measured optimal frequencies, in order to calculate the apparent viscosity.

The device of the first aspect of the invention comprises, for an embodiment, further sensors for sensing other fluid properties, including physical and/or chemical properties, such as pH, temperature or conductivity.

According to a further embodiment of the first aspect of the invention, the control unit is adapted to automatically perform an auto-cleaning process by controlling cleaning means, every predetermined period of time or every one or more measurement operations.

Said auto-cleaning process can constitute a further and independent aspect of the invention, related to a detection device for measuring fluid properties including viscosity and/or density, comprising:

- a sensor comprising:

    - an oscillating element configured and arranged for transmitting a mechanical vibration to a target fluid with which at least part of said oscillating element is in contact;
    - excitation means configured and arranged for making said oscillating element oscillate to transmit said mechanical vibration to the target fluid, when receiving an electrical excitation signal; and

    - sensing means arranged for sensing the mechanical vibration of the oscillating element and for converting the sense mechanical vibration into a sensing electrical signal;
    - and a control unit electrically connected to said excitation means and to said sensing means, and adapted to generate and provide said electrical excitation signal to said excitation means, to receive said sensing electrical signal from the sensing means and to perform, by means of processing means included in the control unit, the measurement of the viscosity and/or density of said target fluid by means of calculation based on values associated to the sensing electrical signal, wherein the control unit is adapted to automatically perform an auto-cleaning process by controlling cleaning means, every predetermined period of time or every one or more measurement operations.

For a preferred implementation of the above mentioned embodiment and of the above mentioned independent aspect, both associated to an auto-cleaning process, said cleaning means comprise at least one of the above mentioned excitation and sensing means, and the control unit is adapted to generate and provide to them with an electrical excitation signal having a high frequency so that one or both of them generate ultrasonic waves.

For an embodiment of the device of the first aspect of the invention, the above mentioned sensor comprises at least a first sensor arrangement comprising:

- an enclosure defining a cavity having a bottom;
- a platform coupled to the enclosure over said bottom;
- said oscillating element, which is a rod mechanically linked to said platform, extending from a lower face thereof and traversing the enclosure bottom to be immersed in the fluid;
- said excitation means comprising an excitation element mechanically coupled to a first region of the platform; and
- said sensing means comprising a detection element mechanically coupled to a second region of the platform.

A further and independent aspect of the invention relates to a detection device for measuring fluid properties including viscosity and/or density, comprising:

- a sensor comprising at least a first sensor arrangement comprising:

    - an enclosure defining a cavity having a bottom;
    - a platform coupled to the enclosure over said bottom;
    - an oscillating element configured and arranged for transmitting a mechanical vibration to a target fluid with which at least part of said oscillating element is in contact, where said oscillating element is a rod mechanically linked to said platform, extending from a lower face thereof and traversing the enclosure bottom to be immersed in the fluid;
    - excitation means configured and arranged for making said oscillating element oscillate to transmit said mechanical vibration to the target fluid, when receiving an electrical excitation signal, wherein said excitation means comprise an excitation element mechanically coupled to a first region of the platform; and
    - sensing means arranged for sensing the mechanical vibration of the oscillating element and for converting the sense mechanical vibration into a sensing electrical signal, wherein said sensing means comprise a detection element mechanically coupled to a second region of the platform.

- and a control unit electrically connected to said excitation means and to said sensing means, and adapted to generate and provide said electrical excitation signal to said excitation means, to receive said sensing electrical signal from the sensing means and to perform, by means of processing means included in the control unit, the measurement of the viscosity and/or density of said target fluid by means of calculation based on values associated to the sensing electrical signal.

For an implementation of the above mentioned embodiment and of the above mentioned independent aspect, both associated to the inclusion of a first sensor arrangement, said sensor further comprises a second sensor arrangement similar to the first one but with an oscillating element having different dimensions and/or shape with respect to the one of the first sensor arrangement, the control unit being adapted to perform redundant fluid viscosity and/or density measurements using both of said first and second sensor arrangements, and to calculate a correction factor based on possible discrepancies in the measurements.

For some embodiments, the above described auto-cleaning process is implemented in the detection device of the above described independent aspect of the invention, where the sensor comprises at least a first sensor arrangement.

For an embodiment of the first aspect of the invention, and also of the other independent aspects of the invention, the control unit is adapted to alter the fluid properties of the target fluid by generating and sending control signals to solvent addition means to add solvents to the target fluid and/or to heating means to heat the target fluid, based on received external control orders received by the processing means or based on local processing, by means of the processing means, of received values of measurements performed in the target fluid by further sensors, internal or external to the device.

According to a further embodiment of the first aspect of the invention, and also of the other independent aspects of the invention, the control unit comprises communication means to communicate, wirelessly or wiredly, at least the performed measurements to a remote computing unit. Preferably, said communication means are of a bidirectional type.

The detector device of the present invention is able to perform accurate viscosity and density measurements on both a static fluid (no movement, no flow, e.g. in a tank) and a fluid flowing in a tube or a pipeline with a certain flow.

A second aspect of the invention concerns to a system for measuring fluid properties including viscosity and/or density, comprising a plurality of detection devices according to the first aspect (or to any of the above mentioned further independent aspects), wirelessly or wiredly communicated with each other and/or with a remote computing unit, forming a communication network.

A third aspect of the invention relates to a method for measuring fluid properties including viscosity and/or density, with a detection device according to the first aspect (or to any of the above mentioned independent aspects), comprising performing at least the above mentioned operation or operations of the control unit and the above mentioned automatic adaptation thereof, and the operations of the sensor.

The above described functions of the elements of the detection device of the first aspect of the invention, for all the described embodiments, are also valid for describing corresponding method steps of the method of the third aspect of the invention, for other embodiments.

Brief description of the drawings

The previous and other advantages and features will be more fully understood from the following detailed description of embodiments, with reference to the attached drawings, which must be considered in an illustrative and non-limiting manner, in which:

Figure 1 schematically shows, by means of a cross section view, part of the sensor of the detection device of the first aspect of the invention, and also of the above mentioned further independent aspect of the invention, for an embodiment for which the sensor of the detection device comprises only one sensor arrangement;

Figure 2 schematically shows, by means of a cross section view, part of the sensor of the detection device of the first aspect of the invention, and also of the above mentioned further independent aspect of the invention, for another embodiment for which the sensor of the detection device comprises two contiguous sensor arrangements;

Figure 3 is a block diagram which schematically shows the main blocks of the detection device of the first aspect of the invention, for an embodiment;

Figure 4a is a flowchart representing the auto-gain control operation performed by the detection device of the first aspect of the invention, and also by the method of the third aspect, for an embodiment;

Figure 4b shows a fractioned frequency spectrum corresponding to the frequency ranges for which the detection device of the invention can work;

Figure 5 schematically shows the same elements of the detection device depicted in Figure 2, but implementing an auto-cleaning operation;

Figure 6 is a flowchart representing the auto-calibration operation performed by the detection device of the first aspect of the invention, and also by the method of the third aspect, for an embodiment;

Figure 7 is a flowchart showing the main operations performed by the detection device of the first aspect of the invention, and also by the method of the third aspect, for an embodiment including the above mentioned auto-gain control operation, auto-cleaning operation and auto-calibration operation;
Figure 8 schematically shows the device of the first aspect of the invention incorporated in a global system; and
Figure 9 schematically shows the system of the second aspect of the invention, in the form of an industrial wireless network.

Detailed description of several embodiments

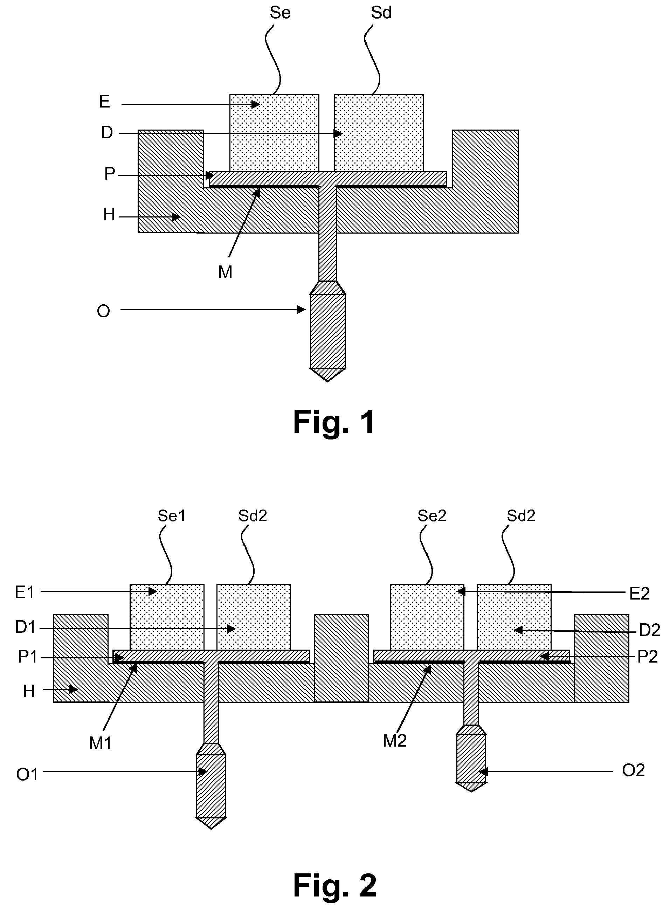

A first possible implementation of the density and/or viscosity sensor included in the detection device of the first aspect of the invention, or in the one of the above mention further independent aspect of the invention, is shown in Figure 1.

The sensor depicted in Figure 1 comprises a first sensor arrangement comprising:

- an enclosure H defining a cavity having a bottom. Only a lower portion of said enclosure H is depicted, the enclosure preferably including also an upper portion (not shown), such that its envelopes and houses therein all the elements of the sensor (except for a portion of the rod O);
- a platform P coupled to the enclosure H over said bottom, in this case with the intermediation of a membrane M;
- an oscillating rod O mechanically linked to the platform P (in this case integral therewith), extending from a lower face thereof and traversing the enclosure bottom to be immersed in the fluid;
- an excitation element E mechanically coupled to a first region of the platform P; and
- a detection element D mechanically coupled to a second region of the platform P.

The oscillating rod O is preferably a few millimetres long and arranged to be, in use, completely immersed in the target fluid.

The operation of the sensor is as follows. An excitation electrical signal Se is applied to the excitation element E which is mechanically coupled to the platform P. This excitation signal Se is converted into a mechanical vibration and transmitted to the platform P and the oscillating rod O that vibrates at a specific frequency. For a preferred embodiment, the excitation element E consists of a piezoelectric element. However, other means can be used to generate the excitation.

The mechanical response (vibration) of the oscillating element O is transferred back through the platform P to the detection element D that converts it into an electrical signal Sd. The detection element D may consist of a piezoelectric element as well.

Another implementation of the density and/or viscosity sensor included in the detection device of the first aspect of the invention, or in the one of the above mention further independent aspect of the invention, is shown in Figure 2.

In this case, the sensor further comprises, within the same enclosure H:

- a first sensor arrangement comprising a platform P1, an oscillating rod 01, an excitation element E1, a detection element D1 and a membrane M1; and
- a second sensor arrangement similar to the first one and comprising a platform P2, an excitation element E2, a detection element D2, a membrane M2 and an oscillating rod 02 also of a few millimetres long but having different dimensions with respect to the first one O1 (they could also have different shapes)

Each rod O1, O2 is mechanically related to one of the two different platforms P1, P2 which are both coupled to the enclosure H of the sensor and located at the bottom of the cavity, as illustrated in Figure 2.

The main purpose of adding another oscillating element is to improve the accuracy of the measurement and the compensation of temperature and pressure (especially at high temperature and high pressure). As the measurement using one or the other oscillating rods O1, 02 should be the same for a specific temperature and pressure, it is then easy to calculate a correction factor using the equality of the measurements.

Both excitation signals Se1 and Se2 are generated by the control unit (not shown) to make the oscillating elements O1 and O2 vibrate at their resonance frequencies. Thus, the amplitude of vibration is maximal for each oscillating element O1, O2. The excitation could be applied simultaneously or sequentially.

It is known from the state of the art that the resonance frequency of an oscillating element depends on its shape. It is calculated by the determination of the moment of inertia first as follow.

$$I_z = \iint\limits_S y^2 \, dy \, dz = \int\limits_{-\frac{b}{2}}^{\frac{b}{2}} dz \int\limits_{-\frac{h}{2}}^{\frac{h}{2}} y^2 \, dy = b \times 2 \times \left(\frac{h}{2}\right)^3 \times \frac{1}{3}$$

And resolving the equation for free vibration given by

$$\frac{\partial^4 v(x;t)}{\partial x^4} + \frac{\rho S}{EI_z}\frac{\partial^2 v(x;t)}{\partial t^2} = 0 \quad (1)$$

$\rho$ : Material density of the oscillating element
$E$: Young modulus
$I_z$ : Moment of inertia
$S$ : Surface of the oscillating element

In this case, it is required to look for stationary solutions, so:

$$v(x;t) = V(x) \times \exp(j\omega t) \quad (2)$$

By injecting (2) in (1), the next is obtained:

$$\frac{d^4 V(x)}{dx^4} - \frac{\rho S \omega^2}{EI_z} V(x) = 0 \quad (3)$$

Putting: $k^4 = \dfrac{\rho S \omega^2}{EI_z}$ . There is a need then to resolve the following differential equation:

$$\frac{d^4 V(x)}{dx^4} - k^4 V(x) = 0 \quad (4)$$

The solutions of these differential equations are given by:

$$V(x) = A\cosh(kx) + B\sinh(kx) + C\cos(kx) + D\sin(kx)$$

With: A, B, C et D, are four real constants that have to be determined using boundary conditions.
The boundary conditions in the present case are as follow:

$$* \text{ in x = 0:} \qquad \begin{cases} v(0;t) = 0 \\ \left.\dfrac{\partial v(x;t)}{\partial x}\right|_{x=0} = 0 \end{cases}$$

So the following system must be verified:

$$\begin{cases} A + C = 0 \\ \left[ Ak\sinh(kx) + Bk\cosh(kx) - Ck\sin(kx) + Dk\cos(kx) \right]_{x=0} = 0 \end{cases}$$

So:

$$\begin{cases} A + C = 0 \\ B + D = 0 \end{cases} \quad (5)$$

*in x= L:

$$\begin{cases} \dfrac{\partial^2 v(x;t)}{\partial x^2} \bigg|_{x=L} = 0 \\ \dfrac{\partial^3 v(x;t)}{\partial x^3} \bigg|_{x=L} = 0 \end{cases}$$

So now, the following system must be verified:

$$\begin{cases} \left[ A\cosh(kx) + B\sinh(kx) - C\cos(kx) - D\sin(kx) \right]_{x=L} = 0 \\ \left[ A\sinh(kx) + B\cosh(kx) + C\sin(kx) - D\cos(kx) \right]_{x=L} = 0 \end{cases}$$

By using (5), one finds:

$$\begin{cases} A(\cosh(kl) + \cos(kL)) + B(\sinh(kL) + \sin(kL)) = 0 \\ A(\sinh(kL) - \sin(kL)) + B(\cosh(kL) + \cos(kL)) = 0 \end{cases}$$

The first equation allows to write:

$$B = -A\frac{\cosh(kl) + \cos(kL)}{\sinh(kL) + \sin(kL)}$$

By injecting this result into the second equation, one finds:

$$A(\sinh(kL) - \sin(kL)) - A\frac{\cosh(kl) + \cos(kL)}{\sinh(kL) + \sin(kL)}(\cosh(kL) + \cos(kL)) = 0$$

Therefore:

$$(\sinh(kL) - \sin(kL))(\sinh(kL) + \sin(kL)) = (\cosh(kl) + \cos(kL))(\cosh(kL) + \cos(kL))$$

$$(\sinh(kL))^2 - (\sin(kL))^2 = (\cosh(kL))^2 + (\cos(kL))^2 + 2\cosh(kL)\cos(kL)$$

$$(\sinh(kL))^2 - (\cosh(kL))^2 = (\sin(kL))^2 + (\cos(kL))^2 + 2\cosh(kL)\cos(kL)$$

Using the fact that:

$$(\cosh(kL))^2 - (\sinh(kL))^2 = (\sin(kL))^2 + (\cos(kL))^2 = 1$$

Finally the next expression is obtained:

$$\boxed{1 + \cosh(kL)\cos(kL) = 0} \quad (6)$$

The numerical solution of the system (6) provides for the first n solutions the following results:

$$\left\{ \begin{array}{l} (kL)_0 = \alpha_0 \\ (kL)_1 = \alpha_1 \\ (kL)_2 = \alpha_2 \\ (kL)_n = \alpha_n \end{array} \right. \quad (7)$$

As:

$$k^4 = \frac{\rho S \omega^2}{EI_z}$$

Then:

$$\omega = \sqrt{\frac{EI_z}{\rho S}} \times k^2 \Rightarrow f = \frac{1}{2\pi} \sqrt{\frac{EI_z}{\rho S}} \times k^2$$

Using the factors found in (7) the expression of the resonance frequency can be written:

$$\boxed{f_n = \frac{\alpha_n^2}{2\pi L^2} \sqrt{\frac{EI_z}{\rho S}}}$$

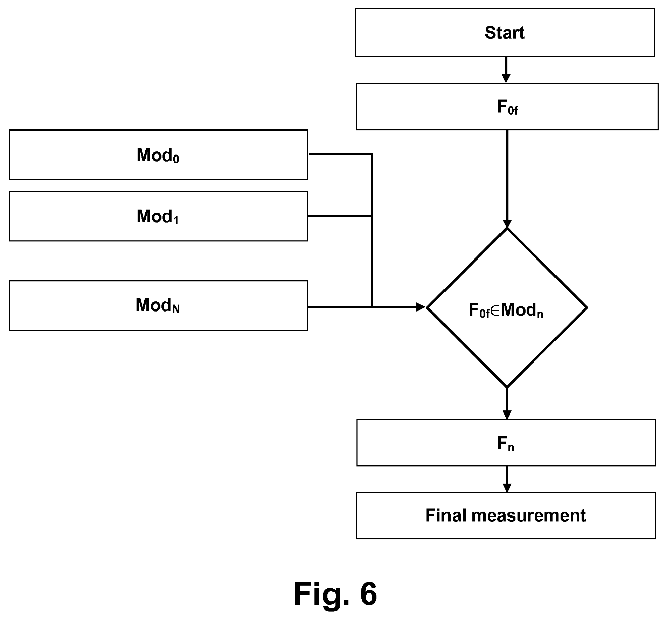

A model correlates this frequency and the fluid properties (density, viscosity). This model is built through a calibration procedure using fluid references with known density and viscosity values at different temperatures, and will be used during the auto-calibration operation described below with reference to Figure 6.

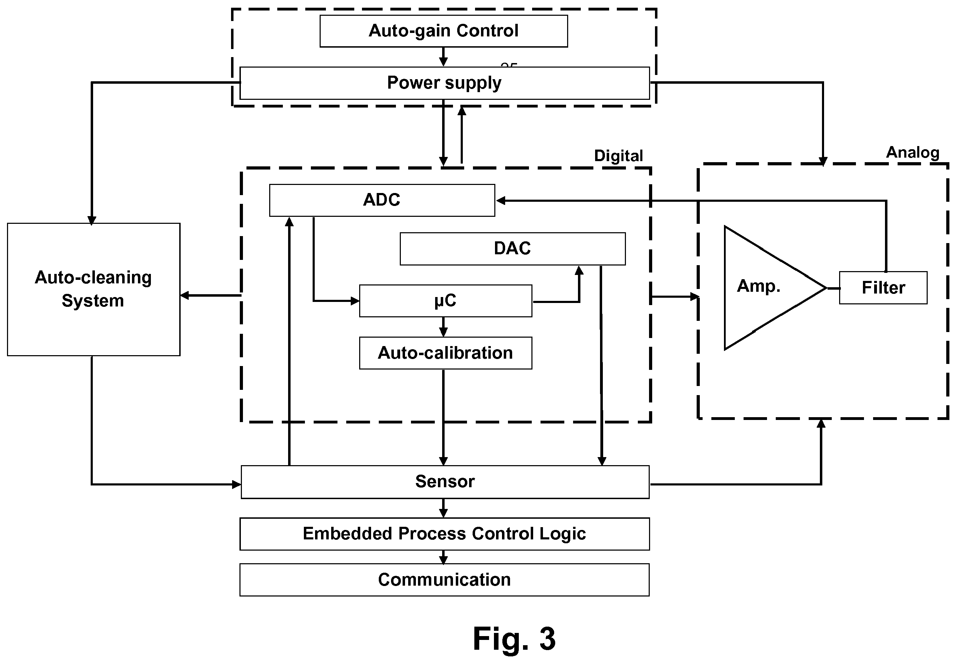

Figure 3 is a block diagram which schematically shows the main blocks of the detection device of the first aspect of the invention, for an embodiment, and presents the working principle of the detector device, and comprises the following main blocks.

Power supply:

It provides the necessary power to the whole detection device of the present invention. The voltage level is adapted for each block. It varies for the digital and analog blocks, depending on the fluid properties the sensor is measuring (density, viscosity).

The voltage applied on the auto-cleaning block has to be at a maximal level as it is described later in this document.

As described in a previous section, the auto-gain control block is in charge of adjusting the power level applied on each block. It may be done by controlling the power provided, the current or the voltage. In the present case, voltage is used for the control. Specifically, it controls the power provided to the excitation element E. The excitation element E generates vibration with more or less power depending on the viscosity of the fluids the properties of which the device is measuring. Said vibration generates forces able to shear the fluids with different levels. So, it generates variable shear rates depending on the viscosity of the fluid.

Therefore, it provides variable shear rates corresponding to the range of viscosity. For example, in case of a high viscosity Newtonian fluid, the energy delivered to the oscillating element O is higher than in case of low viscosity fluid. It enables the oscillating element O to provide a clearer response to the excitation while reducing the consumption of the whole detection device. In case of a non-Newtonian fluid, the different shear rates provided enable to characterize them.

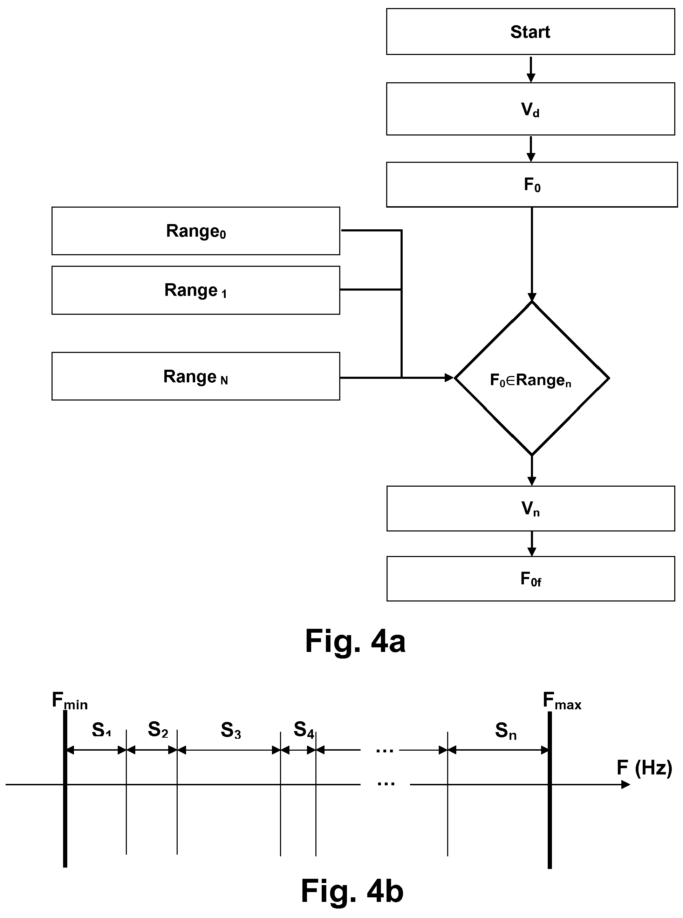

Figure 4a presents the general diagram of the auto-gain control operation.

First, the adjustment depends on the configuration of the power supply the device of the present invention is using, if it is battery powered mode or wired mode the adjustment would be different.

The excitation electrical signal Se applied to the excitation element E has a voltage level with a default value $V_d$. It is used to have a first evaluation of the frequency $F_0$ in the fluid being analyzed, i.e. on the sensing electrical signal Sd caused in response to the application of $V_d$.

The frequency spectrum extending from $F_{min}$ to $F_{max}$ and corresponding to the whole range of density and viscosity is divided into small intervals. Those intervals are shown in Figure 4b and may have a constant size or different sizes $S_1$ to $S_n$. The size $S_n$ of the frequency interval corresponds to a specific $Range_n$ of density or viscosity and it is characterized by a minimal frequency $Fn_{min}$ and a maximal frequency $Fn_{max}$.

The optimal voltage level is determined for each one of the intervals during the factory calibration process depending on the behavior of the oscillating element toward the fluid it is immersed in. It depends mostly on the correlation function between the frequency measured and the known property (the density or the viscosity) of the reference fluid.

In each reference fluid, the oscillating frequency is measured by a laboratory equipment such as a spectrum analyzer or an oscilloscope and compared to the one measured by the detection device with different voltage levels. The optimal voltage level $V_n$ corresponds to the lowest value of said levels providing the best accuracy on the measured frequency by the detection device. It ensures providing enough energy to the oscillating element for the vibration and the measurement while optimizing the power consumption of the detection device.

When the range $Range_n$ is determined, the detection device proceeds to a new excitation of the oscillating element O using the corresponding optimal voltage level $V_n$ in order to determine the measured frequency $F_{0F}$. So, $F_{0F}$ is the frequency measured using the optimal voltage level $V_n$. It allows calculating the final value of the density and or the viscosity.

For a Newtonian fluid, the viscosity obtained is the final measurement. However, in the case of a non Newtonian fluid, it corresponds to the apparent viscosity for this specific configuration. In order to characterize those fluids the detection device applies different voltage levels to the excitation element making the oscillating element O vibrating with different shear rates. For each voltage level and so for each shear rate, the detection device measures the corresponding $F_{0F}$ frequency that enables to calculate the apparent viscosity.

Auto-cleaning system:

The auto-cleaning operation could be performed using different techniques. One of them could be the use of compressed air associated with cleaning fluid, high pressure cleaning product passing through the pipe and the sensor or ultrasounds waves or any other technique.

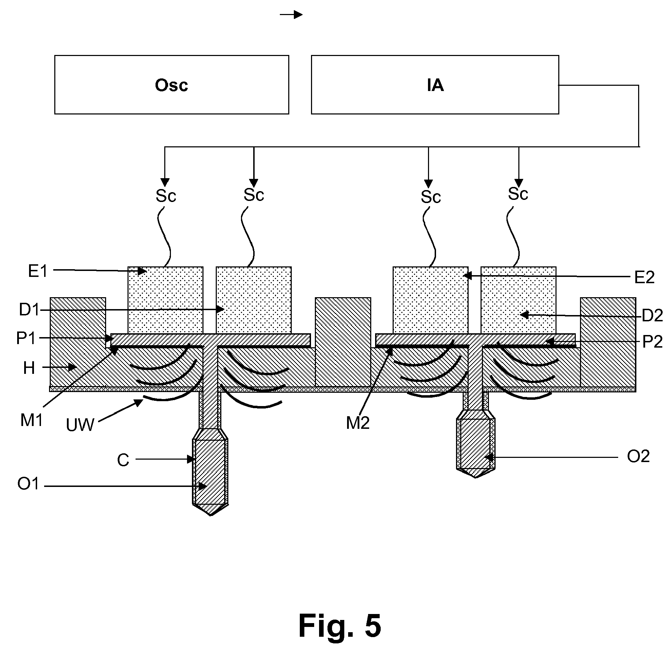

For a preferred embodiment of the present invention, the auto-cleaning operation relies on ultrasounds. As the excitation element uses a piezoelectric base element, it can generate ultrasonic waves by exciting it at a specific high frequency. It doesn't require any additional apparatus or external interference as it is shown in Figure 5.

An electrical oscillator Osc capable of generating such signal (cleaning excitation) with a frequency near to the resonance of the piezoelectric element "only" (not the complete mechanical system: piezoelectric element + enclosure + oscillating element) is added allowing it to generate ultrasonic waves.

This resonance frequency is higher than the measurement frequency excitation. This frequency varies, in this case, between 2 and 12 MHz for the ultrasonic wave's generation while it is around 4 to 30 KHz for the measurements. The cleaning excitation signal is applied, for the illustrated embodiment, on all the piezoelectric elements E1, D1, E2, D2 (excitation and detection) allowing the cleaning of the entire surface that is in contact with the fluid, although for other embodiments only some of the piezoelectric elements could be used.

The amplitude of the excitation cleaning signal Sc must be maximal. The use of a piezoelectric material as ultrasounds generator forces to add an impedance adaptation block IA at the output of the electrical oscillator Osc. If the impedance is not adapted, 90% of the power generated by the oscillator could be lost during the transmission. The impedance adaptation block IA may consist of an electronic power stage such us a push-pull amplifier or any other impedance adaptation assembly.

Above all, the mechanical part of the sensor is covered with a thin layer C of coating material in order to help the fluids not to stick on those parts and during the cleaning procedure using the ultrasounds. The coating material may consist of a thin layer of Teflon or DLC (Diamond Like Carbon) for example, as it is shown in Figure 5.

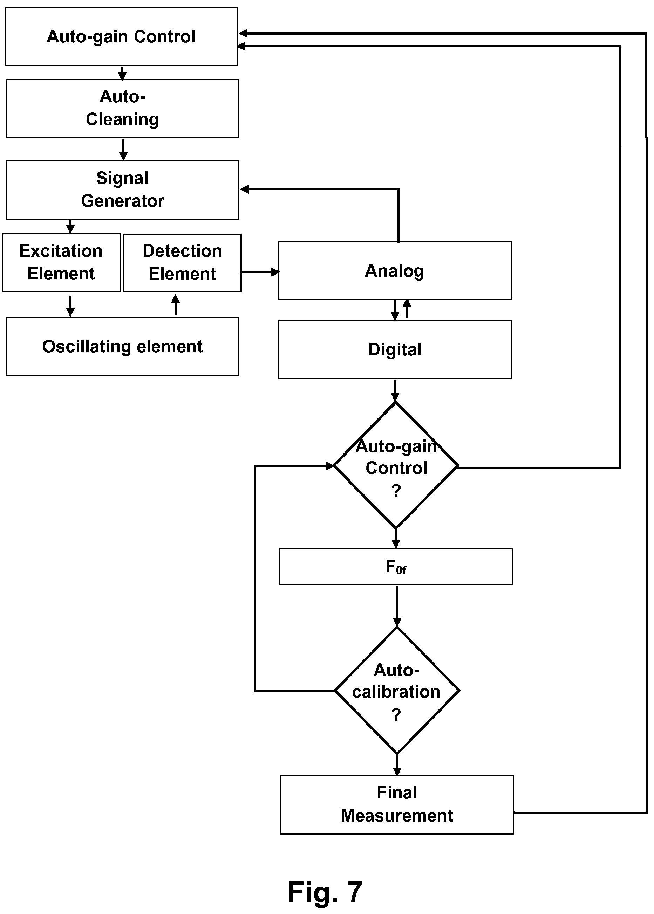

The cleaning excitation signal Sc is applied during a specific period of time determined by experience and before every measurement cycle (cf. Figure 7: Typical measurement description) in order to avoid any interference of previous fluid or sample on the next measurement.

Analog and Digital Blocks:

The digital block is in charge of driving all the operation of the detection device (the sensor, the auto-cleaning system, the auto-gain control, the sensor, the communication and the process control system). For the illustrated embodiment, it consists of a microprocessor or a microcontroller unit, a digital to analog converter and an analog to digital converter. On the other hand, the analog block comprises several amplification and filtering stages for the conditioning of analogical signals. Figure 7 presents the diagram of a typical measurement showing all the elements used and steps performed according to an embodiment of the invention, to obtain the final measurement of viscosity and/or density of the target fluid.

In the illustrate case, the excitation signal Se is generated by the microcontroller, though the "Signal Generator" block, after the auto-gain control and auto-cleaning operations have been performed. Se is conditioned (amplified and filtered) and then sent to the excitation element E who converts it into a vibration that spreads to the oscillating element O.

The response of the oscillating element O is collected by the detection element D. It is amplified and filtered and sent to the analog to digital converter in order to be processed and calculate the corresponding frequency of this signal.

As described previously, the auto-gain control is in charge of adjusting the power provided to the different stages of the detection device, and especially to the oscillating element O.

The auto-gain control block provides to the auto-calibration unit the frequency $F_{0f}$ obtained using the optimal voltage level $V_n$ in order to calculate the density and or the viscosity of the target fluid.

The calculation of the density and or the viscosity is performed using a specific model MOD directly dependent on the frequency of vibration, here $F_{0f}$. The model is determined beforehand during a calibration procedure for a specific range of density $\rho$ and viscosity $\eta$ and correlating the frequency of vibrations.

$$\eta = MOD(f) \ or \ \ \rho = MOD(f)$$

Note: The calculation model for the density would be different from the calculation model for the viscosity.

The parameters $Mod_n$ of the model are calculated for each range of density and or viscosity.

The auto-calibration unit function is to adjust those parameters $Mod_n$ of the model MOD to the range of the measured frequency and so to the range of density and/or viscosity being measured in order to calculate the final density and/or viscosity value corresponding to the current temperature.

The operation principle of the auto-calibration is illustrated in Figure 6, which shows that first a selection of one of several adjusted parameters $Mod_0$, $Mod_1$, ..., $Mod_N$ is performed, particularly of the ones which are adjusted for a frequency range including the value of the optimal frequency $F_{0f}$, and then, by using the selected $Mod_n$ in the calculation model MOD, a frequency $F_n$ is calculated and used to calculate the final measurements of the viscosity and/or density of the target fluid.

This allows using the sensor to work on an extended range (the whole range) of density and/or viscosity, having better and constant performances on all the range whatever the density and/or the viscosity of the fluid being analysed is.

Embedded Process control Unit

The detection device has an embedded process control unit allowing it to control the fluid properties and be active in the process lines if necessary, through digital outputs, unlike the other devices.

These digital outputs may operate to control solid state relays actuating solenoid valves for solvent addition adjusting the viscosity and/or pH control fluids such as amines or acids to control the pH to the programmed set point stored in the fluid detection device. So, the detection device may comprise a pH and or a conductivity sensor.

In some cases, it may comprise a temperature probe. The temperature sensor could be a PT100, a PT1000 or any other temperature sensor. The detection device of the invention may be used to thermo-regulate the fluid while being measured. Its PID temperature control algorithm uses the detection device's integrated temperature probe input to digitally control heating elements such as electric heat tracing by the means of use of appropriate solid state relays.

The temperature probe may be used to compensate process temperature variations in fluid density and/or viscosity adjusting the measurements to a reference temperature.

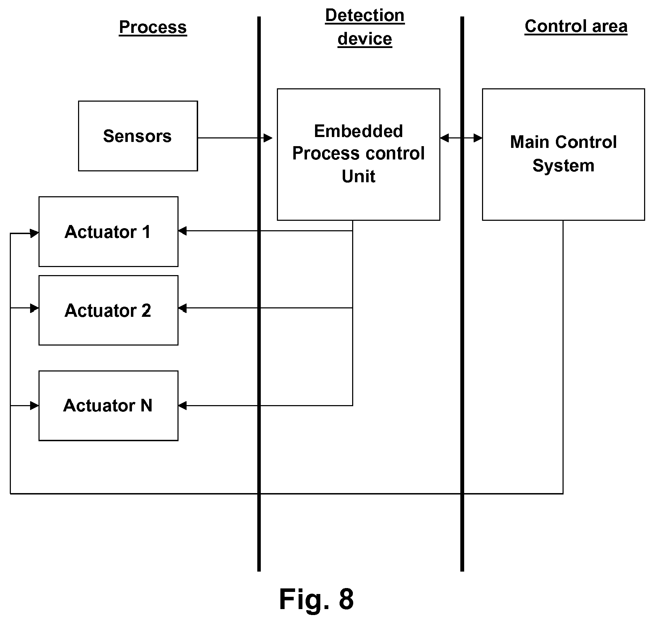

As shown in Figure 8, the control of the process can be handled directly by the detection device. By collecting data from different sensors, the detection device can adjust and control the operation of the process by sending corresponding control signals through its digital outputs to actuators (Actuator 1 to Actuator N) and report it to a main control system or act as a main control system if the system doesn't include one.

Alternatively, the control of the process may be handled by the main control system situated in the control area. In this case, the detection device is used to collect and transmit the data of the process in order for the main control system to take the decisions.

Communication

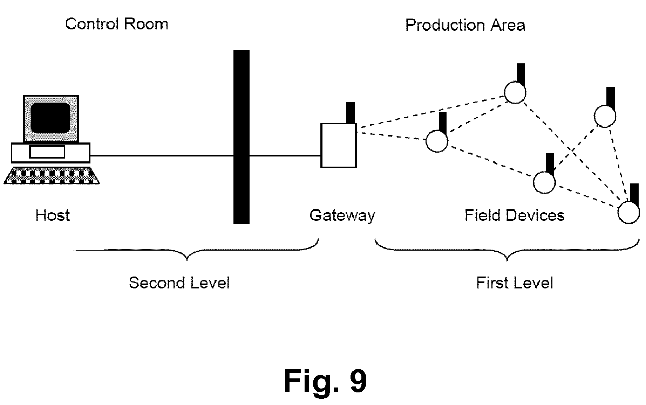

Figure 9 depicts a possible scenario of the system of the second aspect of the invention, where a plurality of detection devices, identified as field devices, are interconnected to each other and to a gateway, in a production area, at a first level, and, through the gateway, to a host of a control room, at a second level.

The detection device of the present invention provides its data through different communication protocols. It may use the IEC 62591 wireless communication protocol, make it being able to join an industrial wireless network.

The IEC 62591 is a secure and robust mesh networking technology operating in the 2.4GHz ISM radio band. IEC 62591 utilizes IEEE 802.15.4 compatible DSSS radios with channel hopping on a packet by packet basis. The IEC 62591 Architecture is designed to be an easy to use, reliable and interoperable wireless mesh sensor protocol. IEC 62591 specifies mandatory requirements that compatible equipment must support for interoperability with wireless devices of different manufacturers.

In IEC 62591 networks, there are two integration levels: The first level is a network between the field devices. Those devices will report to a hub known as the gateway. The second level is the integration between the gateway and the Host for the information which can be a DCS, PLC or computer for asset management or similar (cf. Figure 9).

As stated above, the detection devices are situated in a first level and communicates with the gateway through, for example, the IEC 62591 communication protocol. Because of its optimized power consumption, it can be battery powered. The detection device may use other wireless communication protocols such as Bluetooth™.

The detection device may also use wired communication protocols such as MODBUS RTU, MODBUS TCP or OPC (OLE for Process Control).

It may also use analog communication such as 4-20 mA, 0-10 volts, and frequency outputs.

According to different embodiments, the device of the present invention is capable of measuring, monitoring and controlling the viscosity and density of any fluid, and additionally of further fluid property parameters, such as temperature, pH or conductivity.

It is completely autonomous, as, for a preferred embodiment, an auto-cleaning function, an auto-gain function and an auto-calibration function are integrated therein, allowing it to work automatically without any interference of a third party, reducing drastically the maintenance care. The auto-calibration function allows good and constant measurement performances over the whole range of density and viscosity.

The device of the present invention may be battery powered and used in wireless operation mode because of its ultra-low power consumption design. For a specific implementation, it uses the IEC 62591 wireless communication protocol, which is a secure and robust mesh networking technology operating in the 2.4GHz ISM radio band, to communicate with other analogous devices and/or with other computing devices. For other embodiments, it can also be powered by means of a wired power supply or alternative technologies such as photovoltaic panels, vibration or thermoelectric harvesters or wireless energy transfer.

Its reduced dimensions allow an easy mechanical integration into a small pipe or a use with small quantities of fluid sample. The device of the present invention may comprise a temperature probe and pH or conductivity probe. It also may include outputs that control actuators in fluid properties control making it active in the processing and manufacturing lines. Actuators that can be controlled include valves, pumps or temperature control devices among others.

As, for an embodiment, a real time control logic is distributed in the device of the first aspect or in each device of the system of the third aspect of the present invention, it makes it resilient to communications bus delays and lags typical of non-deterministic networks or interruptions. In case of a sensor malfunctioning or communication loss, the device of the present invention may be configured to set its outputs to a safe state until the sensor fault is corrected or supervised control is restored.

As stated in a previous section, for an embodiment, the detection device includes an auto-gain unit able to control the power provided to each stage of the detection device. Specifically, it provides and controls the power delivered to the excitation element that creates the vibration. By doing so, the excitation element generates vibration with more or less power depending on the fluids the device is measuring the viscosity and/or density. This vibration generates forces able to shear the fluids with different levels. So, it generates variable shear rates depending on the viscosity of the fluid.

The proposed detection device has a constant performance regardless of the extension of the calibration range. For example, it has the same good performance in a calibration range of 1 to 50 cP than in the calibration range of 1 to 1000 cP. This feature allows a single sensor to be used in relatively high viscosity fluids such as lubricating oils without sacrificing accuracy when measuring low viscosity fluids such as gasoline or water.

Therefore, the device of the present invention is completely autonomous due to the auto-calibration and auto-gain functions. It is resilient to process conditions (temperature pressure, moisture, flow, vibration), to dirt and deposition over time thanks to its auto-cleaning system and to wear as it has no moving parts.

To summarize, the main features of the detection device of the present invention for a preferred and complete embodiment (i.e. for an embodiment including most or all of the features of the device described above) and the advantages thereof, are listed below.

Main features:

- Auto-gain control.

  ○ Voltage control

- Auto calibration

  ○ Frequency evaluation (frequency spectrum)
  ○ Model adjustment

- Variable shear rate

- Auto-cleaning using embedded ultrasounds generation system

  ○ Measurement excitation signal
  ○ Cleaning excitation signal

- Suitable for specific applications in Harsh and dirty environments

  ○ paints and inks
  ○ HFO, MDO
  ○ DLO

Advantages:

- Fluid properties measurements: Density, viscosity, temperature, pH, conductivity
- Complete autonomous system
- Embedded control system in the detection device
- Small size: ease integration to process lines
- Allows a very good dynamic response of the sensor over environment fluctuations (temperature, pressure)
- No influence of suspension particles
- Cleaning before each measurement
- High frequency measurements
- Fluid properties measurements in HPHT conditions, >100 bars (>1500 psi), 200°C (Max conditions of most of the industrial process lines. Oil Downhole not included)
- Low power design for battery power operation
- Intrinsic safe design for use in explosive atmospheres

A person skilled in the art could introduce changes and modifications in the embodiments described without departing from the scope of the invention as it is defined in the attached claims.

**Claims**

1. A detection device for measuring fluid properties including viscosity and/or density, comprising:

   - a sensor comprising:

      - an oscillating element (O) configured and arranged for transmitting a mechanical vibration to a target fluid with which at least part of said oscillating element (O) is in contact;
      - excitation means configured and arranged for making said oscillating element (O) oscillate to transmit said mechanical vibration to the target fluid, when receiving an electrical excitation signal (Se, Se1); and
      - sensing means arranged for sensing the mechanical vibration of the oscillating element (O) and for converting the sense mechanical vibration into a sensing electrical signal (Sd, Sd1);

      - and a control unit electrically connected to said excitation means and to said sensing means, and adapted to generate and provide said electrical excitation signal (Se, Se1) to said excitation means, to receive said sensing electrical signal (Sd, Sd1) from the sensing means and to perform, by means of processing means included in the control unit, the measurement of the viscosity and/or density of said target fluid by means of calculation based on values associated to the sensing electrical signal;

   **characterised in that** the detection device is adapted for measuring the viscosity and/or density of a plurality of different target fluids, and **in that** said control unit is adapted to automatically adapt its operation, in field, to the viscosity and/or density of the target fluid in contact with the oscillating element (O).

2. The device of claim 1, wherein the control unit is adapted to control the sensor to perform a rough measurement of the viscosity and/or density of the target fluid, and then perform said automatic adaptation based on said rough measurement in order to perform more accurate measurements of the viscosity and/or density thereof.

3. The device of any of the previous claims, wherein said automatic adaptation of the operation of the control unit is performed in real time.

4. The device of any of the previous claims, wherein said operation of the control unit refers to at least one of said generation of said electrical excitation signal (Se, Se1) and said calculation of the target fluid viscosity and/or density measurement.

5. The device of claim 4, wherein said operation of the control unit referring to the generation of the electrical excitation signal (Se, Se1) is an auto-gain control operation, wherein the control unit comprises memory means which store information ($V_d$) defining a default electrical excitation signal and a data structure correlating data of a plurality of electrical excitation signals with data of a plurality of frequency ranges ($Range_0$, $Range_1$,..., $Range_N$), the processing means having access to said memory means and being adapted to perform said auto-gain operation, which comprises, in sequence:

   i) the processing means retrieving from said memory means said information ($V_d$) defining said default electrical excitation signal, and collaborating with other electronic and electric components of the control unit to use said information to generate and provide a default electrical excitation signal to the excitation means;
   ii) the processing means measuring the frequency ($F_0$) of the received sensing electrical signal; and
   iii) the processing means looking up in said data structure the measured frequency ($F_0$) and retrieving the data ($V_n$) of at least one optimal electrical excitation signal which is correlated with the frequency range ($Range_0$ or $Range_1$... or $Range_n$) encompassing said measured frequency ($F_0$), and providing said at least one optimal electrical excitation signal to the excitation means and measuring at least one optimal frequency ($F_{0f}$)corresponding to said at least one optimal electrical excitation signal.

6. The device of claim 4 or 5, wherein said operation of the control unit referring to the generation of the electrical excitation signal (Se, Se1) is an auto-calibration operation, wherein the control unit comprises memory means which store information regarding several adjusted parameters ($Mod_0$, $Mod_1$, ..., $Mod_N$) of at least one calculation model (MOD), correlating frequency values with fluid viscosity and/or density values, the processing means having access to said memory means and being adapted to perform said auto-calibration operation, which comprises:

   a) selecting, from said several adjusted parameters ($Mod_0$, $Mod_1$, ..., $Mod_N$), the ones which are adjusted for a frequency range including the value of said optimal frequency ($F_{0f}$), and

b) using said calculation model (MOD) with said selected adjusted parameters to calculate the final measurement of the viscosity and/or density of the target fluid.

7. The device of any of the previous claims, comprising further sensors for sensing other fluid properties, including physical and/or chemical properties.

8. The device of any of the previous claims, wherein the control unit is adapted to automatically perform an auto-cleaning process by controlling cleaning means, every predetermined period of time or every one or more measurement operations.

9. The device of claim 8, wherein said cleaning means comprise at least one of said excitation and sensing means, and wherein the control unit is adapted to generate and provide to them with an electrical excitation signal (Sc) having a high frequency so that one or both of them generate ultrasonic waves.

10. The device of any of the previous claims, wherein said sensor comprises at least a first sensor arrangement comprising:

- an enclosure (H) defining a cavity having a bottom;
- a platform (P) coupled to the enclosure (H) over said bottom;
- said oscillating element (O, O1), which is a rod mechanically linked to said platform (P), extending from a lower face thereof and traversing the enclosure bottom to be immersed in the fluid;
- said excitation means comprising an excitation element (E, E1) mechanically coupled to a first region of the platform (P); and
- said sensing means comprising a detection element (D, D1) mechanically coupled to a second region of the platform (P).

11. The device of claim 10, wherein said sensor further comprises a second sensor arrangement similar to the first one but with an oscillating element (02) having different dimensions and/or shape with respect to the one of the first sensor arrangement, the control unit being adapted to perform redundant fluid viscosity and/or density measurements using both of said first and second sensor arrangements, and to calculate a correction factor based on possible discrepancies in the measurements.

12. The device of any of the previous claims, wherein the control unit is adapted to alter the fluid properties of the target fluid by generating and sending control signals to solvent addition means to add solvents to the target fluid and/or to heating means to heat the target fluid, based on received external control orders received by the processing means or based on local processing, by means of the processing means, of received values of measurements performed in the target fluid by further sensors, internal or external to the device.

13. The device of any of the previous claims, wherein said control unit comprises communication means to communicate, wirelessly or wiredly, at least the performed measurements to a remote computing unit.

14. A system for measuring fluid properties including viscosity and/or density, comprising a plurality of detection devices according to claim 13, wirelessly or wiredly communicated with each other and/or with a remote computing unit, forming a communication network.

15. A method for measuring fluid properties including viscosity and/or density, with a detection device according to any of claims 1 to 13, comprising performing at least said operation or operations of the control unit and said automatic adaptation thereof, and the operations of the sensor.

**Fig. 1**

**Fig. 2**

**Fig. 3**

Start

$V_d$

$F_0$

Range$_0$

Range$_1$

Range$_N$

$F_0 \in$ Range$_n$

$V_n$

$F_{0f}$

# Fig. 4a

$F_{min}$   $S_1$   $S_2$   $S_3$   $S_4$   $S_n$   $F_{max}$

...

...

F (Hz)

# Fig. 4b

**Fig. 5**

Fig. 6

**Fig. 7**

**Fig. 8**

Control Room                                    Production Area

Host                        Gateway                Field Devices

Second Level                              First Level

# Fig. 9

Europäisches
Patentamt

European
Patent Office

Office européen
des brevets

## EUROPEAN SEARCH REPORT

Application Number

EP 16 38 2099

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/51898 A1 (HALLIBURTON ENERGY SERV INC [US]) 19 July 2001 (2001-07-19) | 1-6, 8-10,15 | INV. G01N11/16 G01N9/04 G01N9/00 G01N29/036 |
| Y | * page 5, line 13 - page 7, line 15; figures 1A, 1B, 2 * * page 7, line 16 - page 9, line 19; figures 3-6 * | 7,11 | |
| X | WO 95/29388 A1 (AR MET PLASTICS LIMITED [GB]; CASSELDEN IAN [GB]) 2 November 1995 (1995-11-02) * page 3, line 1 - page 4, line 20 * | 1-5,8,9, 15 | |
| X | US 4 783 987 A (HAGER HAROLD E [US] ET AL) 15 November 1988 (1988-11-15) * column 2, line 53 - column 3, line 20 * * column 5, lines 38-60; figure 1 * * column 6, line 63 - column 7, line 8; figure 4 * * column 10, line 48 - column 11, line 50 * * column 13, lines 33-46 * * column 15, lines 21-44 * | 1-5,7-9, 12-15 | |
| | | | TECHNICAL FIELDS SEARCHED (IPC) |
| | | | G01N |
| X | WO 2015/012825 A1 (HALLIBURTON ENERGY SERV INC [US]; GAO LI [US]; PELLETIER MICHAEL T [US] 29 January 2015 (2015-01-29) * paragraphs [0050] - [0052] * * paragraphs [0037] - [0049]; figures 1-4 * | 1-5,8,9, 15 | |
| X | EP 1 804 048 A1 (SCHLUMBERGER SERVICES PETROL [FR]; SCHLUMBERGER TECHNOLOGY BV [NL]; SC) 4 July 2007 (2007-07-04) * paragraph [0017]; claims 10-14 * * paragraph [0009]; claims 1-9; figure 1 * | 1-5, 8-10,15 | |

-/--

The present search report has been drawn up for all claims

| Place of search | Date of completion of the search | Examiner |
|---|---|---|
| The Hague | 12 October 2016 | Bamière, François |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

Application Number

EP 16 38 2099

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 054 313 A (FITZGERALD JOHN V [US] ET AL) 8 October 1991 (1991-10-08) * column 2, line 54 - column 3, line 18 * * column 7, line 26 - column 9, line 30 * ----- | 1-6,8,9, 15 | |
| Y | WO 2014/066433 A1 (GOODBREAD JOSEPH H [US]) 1 May 2014 (2014-05-01) * page 13, lines 33-41; figure 11 * ----- | 7,11 | |

TECHNICAL FIELDS
SEARCHED    (IPC)

The present search report has been drawn up for all claims

| Place of search | Date of completion of the search | Examiner |
|---|---|---|
| The Hague | 12 October 2016 | Bamière, François |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

EP 3 214 424 A1

## ANNEX TO THE EUROPEAN SEARCH REPORT
## ON EUROPEAN PATENT APPLICATION NO.

EP 16 38 2099

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2016

| Patent document cited in search report | | Publication date | Patent family member(s) | | | Publication date |
|---|---|---|---|---|---|---|
| WO 0151898 | A1 | 19-07-2001 | CA | 2397409 | A1 | 19-07-2001 |
| | | | DE | 60121916 | T2 | 01-03-2007 |
| | | | EP | 1254352 | A1 | 06-11-2002 |
| | | | NO | 20023328 | A | 05-09-2002 |
| | | | US | 6378364 | B1 | 30-04-2002 |
| | | | US | 2002178803 | A1 | 05-12-2002 |
| | | | WO | 0151898 | A1 | 19-07-2001 |
| WO 9529388 | A1 | 02-11-1995 | AT | 185420 | T | 15-10-1999 |
| | | | AU | 2313295 | A | 16-11-1995 |
| | | | CA | 2188547 | A1 | 02-11-1995 |
| | | | DE | 69512652 | D1 | 11-11-1999 |
| | | | DE | 69512652 | T2 | 27-04-2000 |
| | | | DK | 0757784 | T3 | 20-03-2000 |
| | | | EP | 0757784 | A1 | 12-02-1997 |
| | | | ES | 2138733 | T3 | 16-01-2000 |
| | | | GB | 2302178 | A | 08-01-1997 |
| | | | JP | H11503820 | A | 30-03-1999 |
| | | | NO | 964523 | A | 14-11-1996 |
| | | | WO | 9529388 | A1 | 02-11-1995 |
| | | | ZA | 9503346 | B | 11-01-1996 |
| US 4783987 | A | 15-11-1988 | NONE | | | |
| WO 2015012825 | A1 | 29-01-2015 | AU | 2013394872 | A1 | 21-01-2016 |
| | | | EP | 2989280 | A1 | 02-03-2016 |
| | | | US | 2016108729 | A1 | 21-04-2016 |
| | | | WO | 2015012825 | A1 | 29-01-2015 |
| EP 1804048 | A1 | 04-07-2007 | AT | 467829 | T | 15-05-2010 |
| | | | CA | 2639850 | A1 | 12-07-2007 |
| | | | CN | 101351696 | A | 21-01-2009 |
| | | | DK | 1804048 | T3 | 06-09-2010 |
| | | | EP | 1804048 | A1 | 04-07-2007 |
| | | | US | 2008257036 | A1 | 23-10-2008 |
| | | | WO | 2007077038 | A1 | 12-07-2007 |
| US 5054313 | A | 08-10-1991 | NONE | | | |
| WO 2014066433 | A1 | 01-05-2014 | NONE | | | |

EPO FORM P0459

For more details about this annex : see Official Journal of the European Patent Office, No. 12/82

**REFERENCES CITED IN THE DESCRIPTION**

**Patent documents cited in the description**

- EP 2045594 A1
- US 7874199 B2
- US 6450013 B1